(19) Europäisches Patentamt
European Patent Office
Office européen des brevets

(11) EP 4 783 270 A1

(12) **EUROPEAN PATENT APPLICATION**
published in accordance with Art. 153(4) EPC

(43) Date of publication:
**29.07.2026 Bulletin 2026/31**

(21) Application number: **24868288.2**

(22) Date of filing: **18.09.2024**

(51) International Patent Classification (IPC):
***H01M 8/1058*** *(2016.01)* ***B32B 27/20*** *(2006.01)*
***B32B 27/32*** *(2006.01)* ***C25B 13/08*** *(2006.01)*
***H01M 8/10*** *(2016.01)* ***H01M 8/106*** *(2016.01)*
***H01M 8/1048*** *(2016.01)* ***H01M 8/1053*** *(2016.01)*

(52) Cooperative Patent Classification (CPC):
**B01D 69/1216; B01D 69/106; B01D 69/1213; B01D 69/148; B01D 71/68; B01D 71/82; B32B 27/20; B32B 27/32; C25B 13/08; H01M 8/10; H01M 8/1048; H01M 8/1053; H01M 8/1058; H01M 8/106;** B01D 71/027; (Cont.)

(86) International application number:
**PCT/JP2024/033340**

(87) International publication number:
**WO 2025/063211 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.09.2023 JP 2023158829**

(71) Applicant: **TEIJIN LIMITED**
**Kita-ku,**
**Osaka-shi,**
**Osaka 530-0005 (JP)**

(72) Inventors:
- **HONDA, Susumu**
  **Osaka-shi, Osaka 530-0005 (JP)**
- **OTSUKA, Atsuhiro**
  **Osaka-shi, Osaka 530-0005 (JP)**
- **NOMURA, Akihisa**
  **Osaka-shi, Osaka 530-0005 (JP)**
- **CHOKAI, Masayuki**
  **Osaka-shi, Osaka 530-0005 (JP)**
- **FORTE, Giuseppe**
  **6225ER Maastricht (NL)**

(74) Representative: **Carpmaels & Ransford LLP**
**One Southampton Row**
**London WC1B 5HA (GB)**

(54) **COMPOSITE MEMBRANE, MEMBRANE-ELECTRODE ASSEMBLY, SOLID POLYMER-TYPE FUEL CELL, SOLID POLYMER-TYPE ELECTROLYSIS DEVICE, AND ELECTROCHEMICAL HYDROGEN COMPRESSION DEVICE**

(57) A composite membrane includes: a porous substrate including a polyolefin microporous membrane; a silica material having a substrate containing silicon dioxide and having a sulfonic acid group on at least a surface of the substrate; and an ion exchange resin, in which a Gurley value is 1,000 sec/100 mL or more.

FIG.1

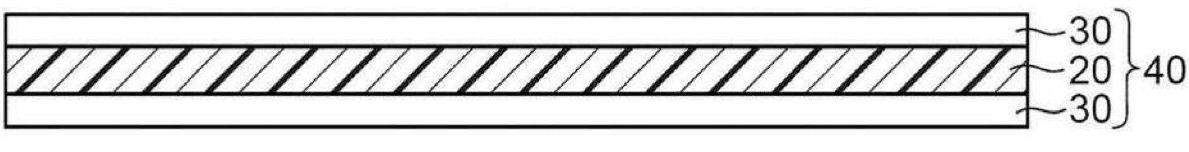


EP 4 783 270 A1

(52) Cooperative Patent Classification (CPC): (Cont.)
B01D 2325/42; Y02E 60/50

## Description

### Technical Field

The present disclosure relates to a composite membrane, a membrane-electrode assembly, a solid polymer fuel cell, a solid polymer electrolyzer, and an electrochemical hydrogen compressor.

### Background Art

Recently, need for improvement in the performance of electrolyte membranes, particularly solid polymer electrolyte membranes has been increasing. For example, a system that generates hydrogen by electrolyzing water using renewable energy such as sunlight and wind power, stores the generated hydrogen at high density by compressing or the like, supplies the hydrogen to a fuel cell when necessary at a place where electric power is required, and generates power has attracted attention as a very clean energy system that does not generate carbon dioxide. In the electrolysis of water, a water electrolysis method is known in which an anode and a cathode are separated by an electrolyte membrane, protons generated at the anode are transferred to the cathode through the electrolyte membrane, and the protons are bonded to electrons at the cathode to obtain hydrogen. The reaction formula at each electrode is as follows.

·Anode: $H_2O \rightarrow 1/2O_2 + 2H^+ + 2e^-$
·Cathode: $2H^+ + 2e^- \rightarrow H_2$

On the other hand, in a fuel cell, protons generated by a hydrogen oxidation reaction in a negative electrode (anode) move to a positive electrode (cathode) through an electrolyte membrane, and water is generated by an oxygen reduction reaction at the positive electrode to generate power. The reaction formula at each electrode is as follows.

·Negative electrode: $H_2 \rightarrow 2H^+ + 2e^-$
·Positive electrode: $1/2O_2 + 2H^+ + 2e^- \rightarrow H_2O$

As is clear from the respective operating principles described above, in both the water electrolysis method and the fuel cell, improvement of proton conductivity of the electrolyte membrane is a general problem. In order to improve the proton conductivity of the electrolyte membrane, measures such as reducing the membrane thickness of the electrolyte membrane or reducing the dry mass (equivalent mass: EW) per one equivalent of the ion exchange group of the electrolyte polymer are considered.

However, thinning of the electrolyte membrane naturally has a limit from the viewpoint of strength required as a diaphragm between electrodes. Also in a reduction in the EW, the ratio of the skeleton part of the electrolyte polymer decreases, and it may be difficult to maintain the solid membrane.

In order to ensure the strength of the electrolyte membrane, there is an example in which a polymer electrolyte is contained in an internal space (void) of a polymer porous membrane as a polymer electrolyte of a fuel cell, thereby achieving improvement in mechanical strength that cannot be achieved by the electrolyte itself (Patent Literature 1). A porous substrate suitable for retaining a polymer electrolyte in a polyethylene porous membrane has been proposed (Patent Literature 2). There is a conventional technique in which a network structure of a porous thin membrane of an ultra-high-molecular-weight polyolefin incorporates an ion exchange resin to provide an electrolyte thin membrane excellent in mechanical strength (Patent Literature 3). There is also a conventional technique in which a thin membrane electrolyte excellent in mechanical strength is provided by incorporating an ionic conductor into a solid polymer porous membrane using a capillary condensation action (Patent Literature 4).

Patent Literature 1: Japanese Patent Application Laid-Open (JP-A) No. 2005-166557
Patent Literature 2: Japanese Patent Application Laid-Open (JP-A) No. 2011-241361
Patent Literature 3: Japanese Patent Application Laid-Open (JP-A) No. S64-22932
Patent Literature 4: Japanese Patent Application Laid-Open (JP-A) No. H1-158051

## SUMMARY OF INVENTION

### Technical Problem

In order to improve the proton conductivity of the electrolyte membrane, the method as described above has been studied, but further improvement of the proton conductivity of the electrolyte membrane is required. On the other hand, in a case in which the electrolyte membrane is mounted on a device such as a fuel cell, the dimensional stability of the

electrolyte membrane is also an important characteristic. As described above, it is expected to develop an electrolyte membrane that exhibits excellent proton conductivity and excellent dimensional stability.

The disclosure has been made in view of the above conventional circumstances, and an object thereof is to provide a composite membrane excellent in proton conductivity and dimensional stability, and a membrane-electrode assembly, a solid polymer fuel cell, a solid polymer electrolyzer, and an electrochemical hydrogen compressor which use the composite membrane.

Solution to Problem

Specific means for attaining the above object are as follows.

<1> A composite membrane including:

a porous substrate including a polyolefin microporous membrane;
a silica material having a substrate containing silicon dioxide and having a sulfonic acid group on at least a surface of the substrate; and
an ion exchange resin, in which
a Gurley value is 1,000 sec/100 mL or more.

<2> The composite membrane according to <1>, in which a porosity of the porous substrate is from 50% to 90%.
<3> The composite membrane according to <1> or <2>, in which the silica material and the ion exchange resin are filled into at least a part of pores of the porous substrate.
<4> The composite membrane according to any one of <1> to <3>, including: the porous substrate; and an ion conductive layer provided on at least one surface side of the porous substrate and containing the silica material and the ion exchange resin.
<5> The composite membrane according to any one of <1> to <4>, in which a ratio (A/B) of an average membrane thickness A of the porous substrate to an average membrane thickness B of the composite membrane is from 0.10 to 1.0.
<6> The composite membrane according to any one of <1> to <5>, in which a ratio (C/D) of a basis weight C of the porous substrate to a basis weight D of the composite membrane is from 0.03 to 0.5.
<7> The composite membrane according to any one of <1> to <6>, in which a ratio of a concentration of sulfur atoms to a total of a concentration of silicon atoms and the concentration of sulfur atoms in the silica material, determined by X-ray fluorescence analysis (XRF) measurement is from 0.01% to 90%.
<8> The composite membrane according to any one of <1> to <7>, in which the substrate is in a particulate form.
<9> The composite membrane according to any one of <1> to <8>, in which the substrate is silica particles, and a number average particle size of primary particles of the silica particles is from 1 nm to 500 nm.
<10> A membrane-electrode assembly including: the composite membrane according to any one of <1> to <9>; a cathode layered on one surface of the composite membrane; and an anode layered on another surface of the composite membrane.
<11> A solid polymer fuel cell including: the membrane-electrode assembly according to <10>; and separators disposed on both surfaces of the membrane-electrode assembly.
<12> A solid polymer electrolyzer including: the membrane-electrode assembly according to <10>; and separators disposed on both surfaces of the membrane-electrode assembly.
<13> An electrochemical hydrogen compressor including the composite membrane according to any one of <1> to <9>.

Advantageous Effects of Invention

According to the disclosure, it is possible to provide a composite membrane excellent in proton conductivity and dimensional stability, and a membrane-electrode assembly, a solid polymer fuel cell, a solid polymer electrolyzer, and an electrochemical hydrogen compressor which use the composite membrane.

BRIEF DESCRIPTION OF DRAWINGS

Fig. 1 is a cross-sectional view of an embodiment of a composite membrane of the disclosure.
Fig. 2 is a cross-sectional view of another embodiment of the composite membrane of the disclosure.

DESCRIPTION OF EMBODIMENTS

Hereinafter, the disclosure will be described in detail. However, the disclosure is not limited to the following embodiments. In the following embodiments, constituent elements (including elemental steps and the like) are not necessarily indispensable unless otherwise stated. The same applies to numerical values and ranges thereof, and does not limit the disclosure.

In the disclosure, the term "step" includes not only a step independent of other steps but also a step by which an action of the step is achieved, though the step cannot be clearly distinguished from other steps.

In the disclosure, a numerical range that has been indicated by use of "to" includes the numerical values which are described before and after "to", as a minimum value and a maximum value, respectively.

In a numerical range described in a stepwise manner in the disclosure, an upper limit value or a lower limit value described in one numerical range may be replaced with an upper limit value or a lower limit value described in another numerical range described in a stepwise manner. In a numerical range described in the disclosure, an upper limit value or a lower limit value of the numerical range may be replaced with a value shown in Examples.

In the disclosure, each component may contain a plurality of corresponding substances. In a case in which a plurality of substances corresponding to each component are present in the composition, the content ratio or content of each component means the total content ratio or content of the plurality of substances present in the composition unless otherwise specified.

In the disclosure, particles corresponding to each component may include a plurality of different kinds of particles. In a case in which a plurality of kinds of particles corresponding to each component are present in a composition, the particle size of each component refers to the value of the particle size for a mixture of the plurality of kinds of particles present in the composition, unless otherwise specified.

In the disclosure, the term "layer" or "membrane" includes, in a case in which a region in which the layer or the membrane is present is observed, not only a case in which the layer or the membrane is formed over an entire area of the region, but also a case in which the layer or the membrane is formed only in a part of the region.

In the disclosure, the term "laminate" refers to stacking layers, two or more layers may be combined, and two or more layers may be removable.

In the disclosure, regarding a porous substrate, the term "longitudinal direction" means a longitudinal direction of the porous substrate (polyolefin microporous membrane) produced in an elongated shape, and the term "width direction" means a direction perpendicular to the longitudinal direction of the porous substrate (polyolefin microporous membrane).

<Composite Membrane>

A composite membrane of the disclosure includes: a porous substrate including a polyolefin microporous membrane; a silica material having a substrate containing silicon dioxide and having a sulfonic acid group on at least a surface of the substrate; and an ion exchange resin, in which a Gurley value is 1,000 sec/100 mL or more.

With the configuration as described above, the composite membrane of the disclosure is excellent in proton conductivity and dimensional stability.

The reason why the composite membrane of the disclosure can exhibit such effects is not clear, but the present inventors presume as follows. However, the following presumption does not limit the composite membrane of the disclosure, and is described as an example.

The porous substrate including a polyolefin microporous membrane exhibits a high mechanical strength. Therefore, it is presumed that in a case in which the composite membrane of the disclosure includes the porous substrate including a polyolefin microporous membrane, excellent dimensional stability can be imparted to the composite membrane of the disclosure.

Since the silica material has a sulfonic acid group on at least a surface of the substrate containing silicon dioxide, the silica material exhibits proton conductivity. The composite membrane of the disclosure contains an ion exchange resin together with the silica material. The ion exchange resin contains a sulfonic acid group, a carboxy group, a quaternary ammonium group, or a primary, secondary, or tertiary amino group as an ion exchange group. In particular, examples of a suitable ion exchange group contained in the ion exchange resin constituting the solid polymer electrolyte membrane include a sulfonic acid group. Since the silica material has a sulfonic acid group on at least a surface of the substrate containing silicon dioxide, the silica material has high affinity with an ion exchange group (particularly, a sulfonic acid group). By dispersing the silica material in the ion exchange resin, the ion exchange group contained in the ion exchange resin and the sulfonic acid group contained in the silica material interact with each other in the composite membrane, and a proton conduction path is likely to be efficiently constructed in the composite membrane.

Therefore, it is presumed that the composite membrane of the disclosure exhibits excellent proton conductivity.

Hereinafter, the porous substrate, the silica material, the ion exchange resin, and other elements used if necessary constituting the composite membrane of the disclosure will be described.

(Porous Substrate)

The composite membrane of the disclosure includes a porous substrate including a polyolefin microporous membrane from the viewpoint of chemical stability, mechanical strength, and hydrophobicity. The porous substrate may be composed of a polyolefin microporous membrane. In the disclosure, a microporous membrane containing polyolefin is referred to as "polyolefin microporous membrane".

In the disclosure, the microporous membrane means a membrane having a large number of micropores inside and having a structure in which the micropores are connected to each other so that gas or liquid can pass from one surface to the other surface.

The polyolefin microporous membrane preferably has a three-dimensional network structure composed of fibrils of polyolefin.

Examples of the polyolefin contained in the polyolefin microporous membrane include polyethylene, polypropylene, polybutylene, polymethylpentene, and a copolymer of polypropylene and polyethylene. Among them, polyethylene is preferable, and high-density polyethylene, a mixture of high-density polyethylene and ultra-high-molecular-weight polyethylene, or the like is suitable.

An example of an embodiment of the polyolefin microporous membrane includes a polyethylene microporous membrane in which polyolefin to be contained is only polyethylene.

An example of an embodiment of the polyolefin microporous membrane includes a microporous membrane containing polypropylene from the viewpoint of having heat resistance that the membrane is not easily broken in the case of being exposed to a high temperature.

An example of an embodiment of the polyolefin microporous membrane includes a polyolefin microporous membrane containing at least a mixture of polyethylene and polypropylene.

An example of an embodiment of the polyolefin microporous membrane includes a polyolefin microporous membrane having a laminated structure of two or more layers, in which at least one layer contains polyethylene and at least one layer contains polypropylene.

The weight average molecular weight (Mw) of polyolefin contained in the polyolefin microporous membrane is preferably from 500000 to 5000000. In a case in which Mw of polyolefin is 500000 or more, sufficient mechanical characteristics can be imparted to the microporous membrane. In a case in which Mw of polyolefin is 5000000 or less, the microporous membrane is easily molded.

The weight average molecular weight (Mw) of polyethylene contained in the polyolefin microporous membrane is preferably 800000 or more, more preferably 1000000 or more, and still more preferably 1100000 or more from the viewpoint of densifying the porous structure of the microporous membrane.

The weight average molecular weight (Mw) of polyethylene contained in the polyolefin microporous membrane is preferably 4900000 or less, more preferably 4800000 or less, and still more preferably 4700000 or less from the viewpoint of increasing the porosity of the microporous membrane.

In a case in which two or more kinds of polyethylenes are contained in the polyolefin microporous membrane, the weight average molecular weight (Mw) of the mixture of two or more kinds of polyethylenes is preferably within the above range.

The weight average molecular weight of polyolefin and polyethylene constituting the polyolefin microporous membrane can be obtained by heating and dissolving the polyolefin microporous membrane in o-dichlorobenzene, and performing measurement by gel permeation chromatography (system: Alliance GPC 2000 Type manufactured by Waters Corporation, column: GMH6-HT and GMH6-HTL) under the conditions of a column temperature of 135°C and a flow rate of 1.0 mL/min. Monodisperse polystyrene (manufactured by Tosoh Corporation) is used for calibrating the molecular weight.

An example of an embodiment of the polyolefin microporous membrane includes a microporous membrane containing a polyolefin composition (in the disclosure, it means a mixture of polyolefins containing two or more polyolefins, and in a case in which the polyolefin to be contained is only polyethylene, it is referred to as a polyethylene composition). The polyolefin composition has an effect of forming a network structure with fibrillation during stretching and increasing the porosity of the polyolefin microporous membrane.

As the polyolefin composition, a polyolefin composition containing ultra-high molecular weight polyethylene having a weight average molecular weight of $9\times10^5$ or more in an amount of from 5 % by mass to 90 % by mass with respect to the total amount of the polyolefin is preferable, a polyolefin composition containing the ultra-high molecular weight polyethylene in an amount of from 10 % by mass to 88 % by mass is more preferable, and a polyolefin composition containing the ultra-high-molecular-weight polyethylene in an amount of from 15 % by mass to 85 % by mass is still more preferable.

The polyolefin composition is preferably a polyolefin composition obtained by mixing ultra-high-molecular-weight polyethylene having a weight average molecular weight of $9\times10^5$ or more and high-density polyethylene having a weight average molecular weight of from $2\times10^5$ to $8\times10^5$ and a density of from 920 kg/m$^3$ to 960 kg/m$^3$ at a mass ratio of from 5 : 95 to 95 : 5 (more preferably from 10 : 90 to 90 : 10, still more preferably from 15 : 85 to 85 : 15).

An example of an embodiment of the polyolefin microporous membrane is a hydrophilized polyolefin microporous membrane. Examples of the hydrophilicized polyolefin microporous membrane include a polyolefin microporous membrane having a surface coated with a hydrophilic compound (for example, an ethylene-vinyl alcohol copolymer); a polyolefin microporous membrane obtained by polymerizing a monomer having a hydrophilic group on a surface thereof; and a polyolefin microporous membrane subjected to plasma treatment or corona treatment.

The proportion of the porous substrate in the composite membrane of the disclosure is preferably 5.0% by mass or more, more preferably 5.5% by mass or more, and still more preferably 6.0% by mass or more from the viewpoint of dimensional stability.

The proportion of the porous substrate in the composite membrane of the disclosure is preferably 20% by mass or less, more preferably 18% by mass or less, and still more preferably 16% by mass or less from the viewpoint of proton conductivity.

The proportion of the porous substrate in the composite membrane of the disclosure is preferably from 5.0% by mass to 20% by mass, more preferably from 5.5% by mass to 18% by mass, and still more preferably from 6.0% by mass to 16% by mass.

(Method of Producing Polyolefin Microporous Membrane)

A method of producing a polyolefin microporous membrane in the disclosure is not particularly limited, and for example, a method of producing a polyolefin microporous membrane through the following steps (1) to (5) is preferable. The polyolefin used as a raw material is as described above.

(1) Preparation of Polyolefin Solution

A polyolefin solution in which a polyolefin is dissolved in a solvent is prepared. Examples of the solvent include paraffin, liquid paraffin, paraffin oil, mineral oil, castor oil, tetralin, ethylene glycol, glycerin, decalin, toluene, xylene, diethylenetriamine, ethylenediamine, dimethylsulfoxide, and hexane. In this case, the solvent may be used singly, or in combination of two or more kinds thereof.

Among the solvents, examples of a volatile solvent include solvents having a boiling point of lower than 300°C at atmospheric pressure, such as decalin, toluene, xylene, diethylenetriamine, ethylenediamine, dimethylsulfoxide, hexane, tetralin, ethylene glycol, and glycerin. Examples of a nonvolatile solvent include solvents having a boiling point of 300°C or higher at atmospheric pressure, such as paraffin, liquid paraffin, paraffin oil, mineral oil, and castor oil. Examples of a mixed solvent include a combination of decalin and liquid paraffin.

In the case of using liquid paraffin as a solvent, the average pore size of the polyolefin microporous membrane tends to decrease. In the case of using decalin singly as a solvent, the average pore size of the polyolefin microporous membrane tends to be larger than that in the case of using liquid paraffin in combination. However, the average pore size can also be controlled by other process parameters, and is not limited thereto.

The polyolefin concentration of the polyolefin solution is preferably from 1% by mass to 45% by mass and more preferably from 10% by mass to 40% by mass. In a case in which the polyolefin concentration is 1% by mass or more, a gel composition obtained by cold gelation is hard to deform since the gel composition can be maintained so as not to highly swell by the solvent, which provides favorable handleability. On the other hand, in a case in which the polyolefin concentration is 45% by mass or less, the discharge rate can be maintained since the pressure during extrusion can be suppressed, which provides excellent productivity.

(2) Extrusion of Polyolefin Solution

The prepared polyolefin solution is kneaded with a single-screw extruder or a twin-screw extruder, and extruded at a temperature from the melting point to the melting point + 70°C through a T-die, a cross hanger die, or an I-die. At this time, a twin-screw extruder is preferably used.

Subsequently, the polyolefin solution extruded from the die is allowed to pass through a chill roll or cooling bath to form a gel composition. At this time, it is preferred that the polyolefin solution is quenched to a temperature below the gelation temperature to be gelled.

(3) Desolvation treatment

Next, the solvent is removed from the gel composition. In the case of using a volatile solvent in the preparation of the polyolefin solution, the solvent can be removed from the gel composition by evaporating by heating or the like which is also served as a pre-heating step. In the case of using a nonvolatile solvent in the preparation of the polyolefin solution, the solvent can be removed by, for example, squeezing out by applying a pressure. It is not necessary to completely remove

the solvent.

(4) Stretching of Gel Composition

After the desolvation treatment, the gel composition is stretched. Before the stretching treatment, a relaxing treatment may be performed. In the stretching treatment, the gel composition is heated and uniaxially or biaxially stretched at a predetermined ratio by a normal tenter method, a roll method, a rolling method, or a combination of these methods. The biaxial stretching may be performed simultaneously or successively. The stretching may be performed in longitudinal multistep, or three- or four-step.

The stretching temperature is preferably 80°C or higher and lower than the melting point of the polyolefin used for production, and more preferably from 90°C to 130°C. In a case in which the heating temperature is lower than the melting point, the gel composition is hardly dissolved, so that stretching can be favorably performed. In a case in which the heating temperature is 80°C or higher, the gel composition is sufficiently softened and can be stretched at a high ratio without being broken in stretching.

The stretch magnification varies depending on the thickness of the original sheet, and is at least two times or more, preferably from 4 times to 20 times in the uniaxial direction.

After stretching, heat fixation is performed if necessary to provide heat dimensional stability.

(5) Extraction and Removal of Solvent

The gel composition after stretching is immersed in an extraction solvent to extract a solvent, particularly a nonvolatile solvent. As the extraction solvent, for example, easily volatile solvents such as: hydrocarbons such as pentane, hexane, heptane, cyclohexane, decalin, and tetralin; chlorinated hydrocarbons such as methylene chloride, carbon tetrachloride; fluorinated hydrocarbons such as trifluoroethane; and ethers such as diethyl ether and dioxane can be used. These solvents are appropriately selected according to the solvent used for preparing the polyolefin solution, particularly the nonvolatile solvent, and can be used singly or in combination. As for the extraction of the solvent, the solvent in the polyolefin microporous membrane is removed to less than 1% by mass.

(Physical Properties of Porous Substrate)

The average membrane thickness of the porous substrate is preferably 0.01 μm or more, more preferably 3 μm or more, still more preferably 3.5 μm or more, particularly preferably 4 μm or more, and especially particularly preferably 5 μm or more from the viewpoint of increasing the strength of the porous substrate.

The average membrane thickness of the porous substrate is preferably 300 μm or less, more preferably 250 μm or less, still more preferably 200 μm or less, particularly preferably 100 μm or less, and especially particularly preferably 50 μm or less from the viewpoint of maintaining ion conductivity.

The average membrane thickness of the porous substrate is preferably from 0.01 μm to 300 μm, more preferably from 3 μm to 250 μm, still more preferably from 3.5 μm to 200 μm, particularly preferably from 4 μm to 100 μm, and especially particularly preferably from 5 μm to 50 μm.

The average membrane thickness of the porous substrate is determined by measuring 20 points with a contact type membrane thickness meter and averaging the measured values.

The porosity of the porous substrate is preferably 50% or more, more preferably 51% or more, still more preferably 52% or more, and particularly preferably 53% or more from the viewpoint of the filling rate of the silica material and the ion exchange resin.

The porosity of the porous substrate is preferably 90% or less, more preferably 88% or less, still more preferably 85% or less, and particularly preferably 84% or less from the viewpoint of the mechanical strength of the membrane.

The porosity of the porous substrate is preferably from 50% to 90%, more preferably from 51% to 88%, still more preferably from 52% to 85%, and particularly preferably from 53% to 84%.

The porosity of the porous substrate was calculated from the following formula on the basis of the basis weight (Ws: g/m$^2$) of the porous substrate, the true density (ds: g/cm$^3$) of polyolefin, and the membrane thickness (t: μm) of the porous substrate. In a case in which two or more kinds of polyolefins are contained in the porous substrate, the true density of polyolefin means the true density of a mixture of two or more kinds of polyolefins.

$$\varepsilon\,(\%) = \{1 - Ws/(ds \cdot t)\} \times 100$$

The Gurley value of the porous substrate is preferably 0.1 sec/100 mL or more, more preferably 0.2 sec/100 mL or more, still more preferably 0.5 sec/100 mL or more, and particularly preferably 1 sec/100 mL or more from the viewpoint of

mechanical strength and the like.

The Gurley value of the porous substrate is preferably 500 sec/100 mL or less, more preferably 450 sec/100 mL or less, still more preferably 400 sec/100 mL or less, and particularly preferably 300 sec/100 mL or less from the viewpoint of maintaining ion conductivity.

The Gurley value of the porous substrate is preferably from 0.1 sec/100 mL to 500 sec/100 mL, more preferably from 0.2 sec/100 mL to 450 sec/100 mL, still more preferably from 0.5 sec/100 mL to 400 sec/100 mL, and particularly preferably from 1 sec/100 mL to 300 sec/100 mL.

The Gurley value of the porous substrate is a value measured in accordance with JIS P8117:2009.

The breaking strength of the porous substrate is preferably from 50 MPa to 400 MPa and more preferably from 80 MPa to 300 MPa from the viewpoint of mechanical strength and the like.

The breaking strength is measured in accordance with JIS L1015:2010 by using a tensile tester. In the measurement of the breaking strength, the distance between chucks is 100 mm, and the tensile speed is 50 mm/min. As the tensile tester, EZ-LX manufactured by Shimadzu Corporation or a device similar thereto can be used.

The average pore size of the porous substrate is preferably 0.001 μm or more, more preferably 0.005 μm or more, still more preferably 0.01 μm or more, and particularly preferably 0.02 μm or more from the viewpoint of the filling properties of the silica material and the ion exchange resin.

The average pore size of the porous substrate is preferably 100 μm or less, more preferably 3.0 μm or less, still more preferably 2.0 μm or less, and particularly preferably 1.0 μm or less from the viewpoint of mechanical strength and the like.

The average pore size of the porous substrate is preferably from 0.001 μm to 100 μm, more preferably from 0.005 μm to 3.0 μm, still more preferably from 0.01 μm to 2.0 μm, and particularly preferably from 0.02 μm to 1.0 μm.

The average pore size of the porous substrate can be measured using a perm porometer in accordance with ASTM E1294-89. A fluorine-based inert liquid is used as the immersion liquid.

The basis weight of the porous substrate is preferably 0.5 $g/m^2$ or more, more preferably 0.7 $g/m^2$ or more, still more preferably 1.0 $g/m^2$ or more, and particularly preferably 1.5 $g/m^2$ or more from the viewpoint of mechanical strength and the like.

The basis weight of the porous substrate is preferably 50.0 $g/m^2$ or less, more preferably 45.0 $g/m^2$ or less, still more preferably 40.0 $g/m^2$ or less, and particularly preferably 20.0 $g/m^2$ or less from the viewpoint of improving proton conductivity.

The basis weight of the porous substrate is preferably from 0.5 $g/m^2$ to 50.0 $g/m^2$, more preferably from 0.7 $g/m^2$ to 45.0 $g/m^2$, still more preferably from 1.0 $g/m^2$ to 40.0 $g/m^2$, and particularly preferably from 1.5 $g/m^2$ to 20.0 $g/m^2$ or less.

The basis weight of the porous substrate is determined by measuring the weight of a sample having a certain size and dividing the weight by the area.

(Silica Material)

The composite membrane of the disclosure contains a silica material having a substrate containing silicon dioxide and having a sulfonic acid group on at least a surface of the substrate from the viewpoint of imparting proton conductivity to the composite membrane. The sulfonic acid group may be chemically bonded to the surface of the substrate.

Hereinafter, the silica material used in the disclosure will be described in detail.

-Substrate-

The silica material has a substrate containing silicon dioxide. The shape of the substrate is not particularly limited, and examples thereof include a substrate in a particulate, fibrous, plate, or thin film form. From the viewpoint of the filling property of the silica material into the pores of the porous substrate, the shape of the substrate is preferably in a particulate form.

Examples of the particulate substrate containing silicon dioxide include silica particles. The silica particles may be crystalline or amorphous. The silica particles may be particles produced using a silicon compound such as water glass or alkoxysilane as a raw material, or may be particles obtained by pulverizing quartz.

Specific examples of the silica particles include silica particles produced by a sol-gel method, colloidal silica particles, fumed silica particles obtained by a gas phase method, and fused silica particles.

The number average particle size of the primary particles of the silica particles is preferably from 1 nm to 500 nm, more preferably from 5 nm to 300 nm, still more preferably from 8 nm to 200 nm, and particularly preferably from 10 nm to 100 nm.

The number average particle size of the primary particles of the silica particles refers to a value calculated as an arithmetic average value obtained by determining the equivalent circle diameters of 50 silica particles by scanning electron

microscope observation.

The primary particles of the silica particles may be aggregated to form secondary particles.

The volume average particle size of the secondary particles of the silica particles is preferably from 500 nm to 500 μm, more preferably from 1 μm to 300 μm, and still more preferably from 10 μm to 150 μm.

The volume average particle size of the secondary particles of the silica particles is a value measured using a laser diffraction particle size distribution measuring apparatus, and is measured using, for example, Mastersizer 2000 manufactured by Sysmex Corporation. Specifically, the center particle diameter (D50) in the volume particle size distribution of a dispersion obtained by mixing and dispersing silica particles, water (dispersion medium), and nonionic surfactant (Igepal CA630; dispersant) is defined as the volume average particle size.

Examples of the fibrous substrate containing silicon dioxide include glass fibers such as long glass fibers (glass fibers) and short glass fibers (glass wool), and silica nanofibers. The glass fiber is preferably made of alkali-free glass (E glass).

The diameter of the glass fiber is not particularly limited, and is preferably from 1 μm to 100 μm and more preferably from 5 μm to 50 μm.

The fiber length of the long glass fiber is not particularly limited. The fiber length of the short glass fiber is preferably from 0.1 mm to 30 mm and more preferably from 0.2 mm to 20 mm.

The diameter of the glass fiber refers to a number average fiber diameter indicating an average value of the diameters of the glass fibers. The number average fiber diameter refers to an arithmetic average in a case in which 50 glass fibers are randomly selected and the fiber diameter is measured with an optical microscope.

The fiber length of the short glass fibers is a value obtained as an arithmetic average by visually measuring the length of each of 100 randomly selected fibers to the unit of 0.1 mm.

Examples of the thin film-shaped substrate containing silicon dioxide include scale-like glass particles.

The volume average particle size of the scale-like glass particles is preferably from 0.1 μm to 200 μm, more preferably from 0.2 μm to 150 μm, and still more preferably from 0.2 μm to 100 μm. The volume average particle size of the scale-like glass particles can be measured in the same manner as the volume average particle size of the silica particles.

The average thickness of the scale-like glass particles is preferably from 1 μm to 20 μm, more preferably from 1.5 μm to 15 μm, and still more preferably from 2 μm to 10 μm. The average thickness of the scale-like glass particles refers to an arithmetic average in a case in which 50 glass particles are randomly selected from 100 randomly selected glass particles, and the thickness of the glass particles is measured with an optical microscope.

The ratio of the volume average particle size of the scale-like glass particles to the average thickness thereof (aspect ratio: volume average particle size/average thickness) is preferably from 1.2 to 2000, more preferably from 1.5 to 1500, and still more preferably from 2 to 1000. The aspect ratio of the scale-like glass particles can be calculated as a ratio of the volume average particle size and the average thickness of the scale-like glass particles obtained by the above-described method.

In addition to the thin film-shaped substrate, a plate-shaped substrate containing silicon dioxide may be used. Examples of the plate-shaped substrate include a glass plate.

The substrate is preferably silica particles or glass fibers and more preferably silica particles from the viewpoint of processability.

-Sulfonic Acid Group-

The silica material has a sulfonic acid group on at least a surface of the substrate. The sulfonic acid group may be chemically bonded to the surface of the substrate.

The presence of a sulfonic acid group on at least the surface of the substrate can be confirmed, for example, by the following method.

Whether or not sulfur atoms are present in the silica material is confirmed using X-ray photoelectron spectroscopy (XPS), X-ray Fluorescence (XRF) analysis, or the like, and the abundance of sulfur atoms is quantified. Whether or not sulfur atoms are present on the surface of the silica material is confirmed using scanning electron microscope-energy dispersive X-ray spectrometry (SEM-EDX).

0.1 g of silica material is dispersed in 1.9 g of deionized water, and the pH of the dispersion (5% by mass dispersion) is measured at 25°C.

In a case in which sulfur atoms are present on the surface of the silica material and the pH of the dispersion is 3 or less, it can be determined that a sulfonic acid group is present on at least the surface of the substrate.

In an aspect, the ratio (S/Si) of the sulfur atoms to the silicon atoms contained in the silica material is preferably from 0.001 to 0.25, more preferably from 0.0015 to 0.2, and still more preferably from 0.002 to 0.15.

In another aspect, the ratio (S/Si) of the sulfur atoms to the silicon atoms contained in the silica material is preferably from 0.001 to 0.72, more preferably from 0.0015 to 0.67, and still more preferably from 0.002 to 0.62. As the amounts of sulfur atoms and silicon atoms contained in the silica material, which are used for calculating the ratio (S/Si) of

the sulfur atoms to the silicon atoms, the atomic abundance obtained by XPS measurement is used.

In an aspect, the concentration of the sulfur atoms contained in the silica material is preferably from 50 mg/kg to 250 g/kg, more preferably from 150 mg/kg to 200 g/kg, and still more preferably from 300 mg/kg to 150 g/kg.

In another aspect, the concentration of the sulfur atoms contained in the silica material is preferably from 50 mg/kg to 50 g/kg, more preferably from 150 mg/kg to 30 g/kg, and still more preferably from 300 mg/kg to 20 g/kg.

The concentration of the sulfur atoms contained in the silica material refers to an atomic abundance determined by XRF measurement.

The degree of sulfonation (degree of sulfonation based on XRF) of the silica material is preferably from 0.01% to 90%, more preferably from 0.03% to 80%, and still more preferably from 0.06% to 60%. As the degree of sulfonation based on XRF, a value determined as a ratio of the concentration of the sulfur atoms to the total of the concentration of the silicon atoms and the concentration of the sulfur atoms determined by XRF measurement is used.

In an aspect, the proportion of the silica material in the composite membrane of the disclosure is preferably 0.1% by mass or more, more preferably 0.5% by mass or more, and still more preferably 0.8% by mass or more from the viewpoint of ion conductivity.

In an aspect, the proportion of the silica material in the composite membrane of the disclosure is preferably 20% by mass or less, more preferably 15% by mass or less, and still more preferably 10% by mass or less from the viewpoint of dimensional stability.

In an aspect, the proportion of the silica material in the composite membrane of the disclosure is preferably from 0.1% by mass to 20% by mass, more preferably from 0.5% by mass to 15% by mass, and still more preferably from 0.8% by mass to 10% by mass.

In another aspect, the proportion of the silica material in the composite membrane of the disclosure is preferably 0.5% by mass or more, more preferably 0.7% by mass or more, and still more preferably 0.8% by mass or more from the viewpoint of ion conductivity.

In another aspect, the proportion of the silica material in the composite membrane of the disclosure is preferably 45% by mass or less, more preferably 35% by mass or less, and still more preferably 25% by mass or less from the viewpoint of dimensional stability.

In another aspect, the proportion of the silica material in the composite membrane of the disclosure is preferably from 0.5% by mass to 45% by mass, more preferably from 0.7% by mass to 35% by mass, and still more preferably from 0.8% by mass to 25% by mass.

-Method of Producing Silica Material-

The silica material has a sulfonic acid group on at least a surface of the substrate. A method of allowing a sulfonic acid group on at least a surface of the substrate is not particularly limited. For example, the silica material used in the disclosure can be produced by bringing a sulfonating agent into contact with the substrate described above.

A method of bringing a sulfonating agent into contact with the substrate is not particularly limited, and examples thereof include a method in which the substrate is immersed in the sulfonating agent and a method in which the sulfonating agent is sprayed on the substrate.

The temperature of the sulfonating agent in a case in which the sulfonating agent is brought into contact with the substrate is preferably from 10°C to 90°C, more preferably from 15°C to 80°C, and still more preferably from 20°C to 70°C.

The immersion time in a case in which the substrate is immersed in the sulfonating agent is preferably from 5 minutes to 120 minutes, more preferably from 10 minutes to 100 minutes, and still more preferably from 15 minutes to 60 minutes.

In a case in which the substrate is immersed in the sulfonating agent, as for the ratio of the sulfonating agent to the substrate, the sulfonating agent is preferably from 1000 parts by mass to 50000 parts by mass, more preferably from 2000 parts by mass to 30000 parts by mass, and still more preferably from 3000 parts by mass to 20000 parts by mass with respect to 100 parts by mass of the substrate.

In a case in which the substrate is immersed in the sulfonating agent, stirring treatment may be performed. The stirring method is not particularly limited, and examples thereof include stirring using a stirring blade and stirring using a stirring device having a planetary rotation mechanism. By using a stirring device having a planetary rotation mechanism, the presence of air bubbles can be efficiently removed.

After the sulfonating agent is brought into contact with the substrate, the substrate may be subjected to washing with ion-exchanged water, deionized water, or the like and filtration, the substrate may be subjected to washing with an organic solvent such as acetone and filtration if necessary, and the substrate may be dried to obtain the silica material.

Examples of the sulfonating agent include fuming sulfuric acid, concentrated sulfuric acid, dilute sulfuric acid, and anhydrous sulfuric acid, fuming sulfuric acid or concentrated sulfuric acid is preferable, and fuming sulfuric acid is more preferable.

The concentration of sulfur trioxide in the fuming sulfuric acid is preferably from 10% by mass to 80% by mass,

more preferably from 15% by mass to 75% by mass, and still more preferably from 20% by mass to 70% by mass.

(Ion Exchange Resin)

The composite membrane of the disclosure contains an ion exchange resin from the viewpoint of imparting proton conductivity to the composite membrane.

The ion exchange group contained in the ion exchange resin is not particularly limited, and examples thereof include a sulfonic acid group, a carboxy group, a quaternary ammonium group, and a primary, secondary, or tertiary amino group.

Among them, a sulfonic acid group excellent in proton conductivity is preferable.

The type of the ion exchange resin contained in the composite membrane of the disclosure is not particularly limited. Examples of the ion exchange resin include an aromatic ion exchange resin and a fluorine-based ion exchange resin.

Examples of the aromatic ion exchange resin include sulfonated products of aromatic polymers such as polyphenylene, polyphenylene sulfide, polyphenylene oxide, diphenylparaphenylene oxide, polysulfone, polyethersulfone, polyether ketone, polyether ether ketone, polyether ketone ketone, polyether nitrile, polyamide, polybenzazole, and polyimide.

More specifically, examples thereof include a sulfonated product of polyphenylene including a structural unit represented by Formula (I), a sulfonated product of polyphenylene sulfide including a structural unit represented by Formula (II), a sulfonated product of polyphenylene oxide including a structural unit represented by Formula (III), a sulfonated product of polydiphenylparaphenylene oxide including a structural unit represented by Formula (IV), a sulfonated product of polysulfone including a structural unit represented by Formula (V), a sulfonated product of polyethersulfone including a structural unit represented by Formula (VI), a sulfonated product of polyether ketone including a structural unit represented by Formula (VII), a sulfonated product of polyether ether ketone including a structural unit represented by Formula (VIII), a sulfonated product of polyether ketone ketone including a structural unit represented by Formula (IX), a sulfonated product of polyether nitrile including a structural unit represented by Formula (X), a sulfonated product of polyamide including a structural unit represented by Formula (XI), a sulfonated product of polybenzazole including a structural unit represented by Formula (XII), and a sulfonated product of polyimide including a structural unit represented by Formula (XIII).

Among them, a sulfonated product of polyethersulfone including a structural unit represented by Formula (VI), a sulfonated product of polyphenylene sulfide including a structural unit represented by Formula (II), and a sulfonated product of polysulfone including a structural unit represented by Formula (V) are preferable, and a sulfonated product of polyethersulfone including a structural unit represented by Formula (VI) is more preferable.

In the disclosure, two or more kinds of ion exchange resins may be used in combination. In the case of using two or more kinds of ion exchange resins in combination, for example, a sulfonated product of polyethersulfone including a structural unit represented by Formula (VI) and a sulfonated product of a resin other than the polyethersulfone described above may be used in combination.

In Formulas (I) to (XIII), n represents an integer of 1 or 2 or more.

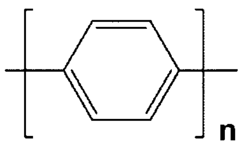

(I)

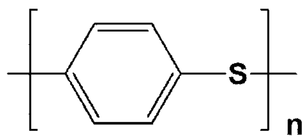

(II)

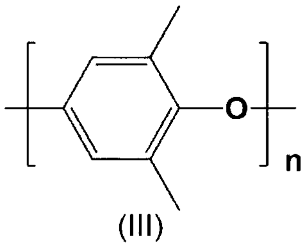

(III)

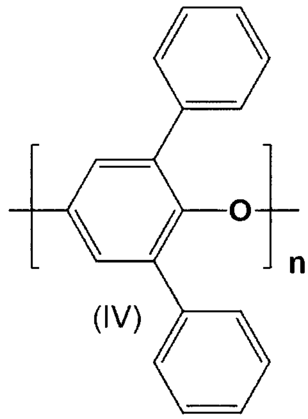

(IV)

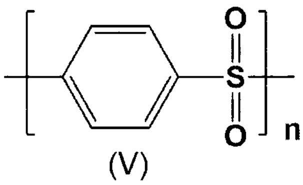

(V)

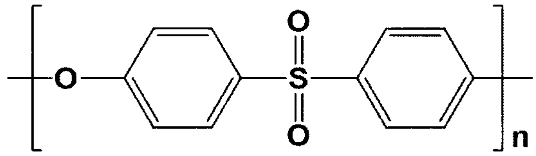

(VI)

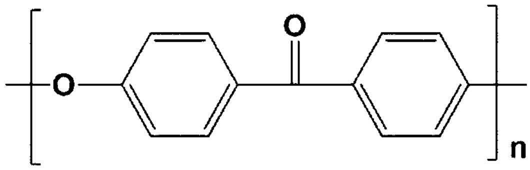

(VII)

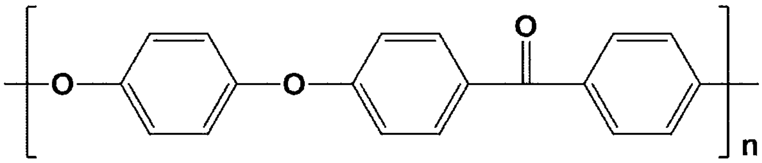

(VIII)

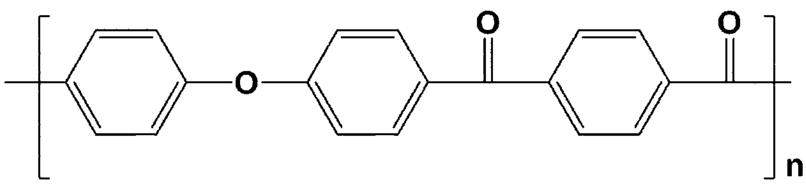

(IX)

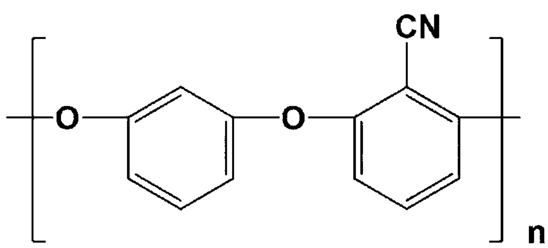

(X)

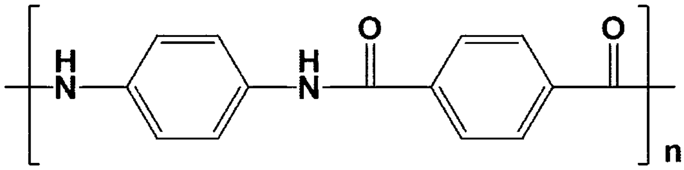
(XI)

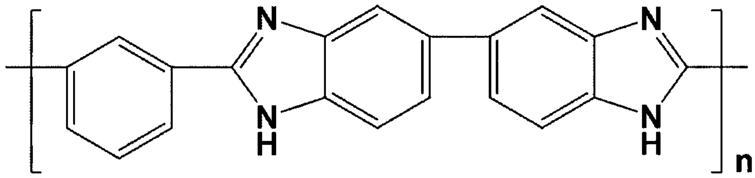
(XII)

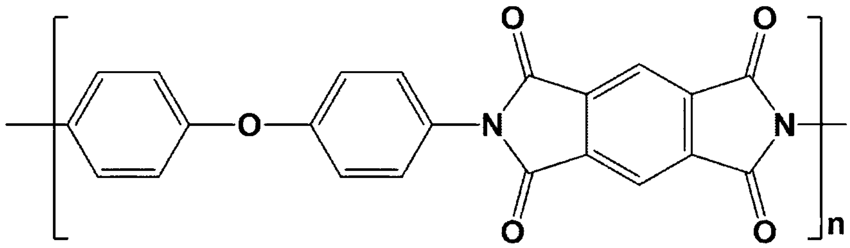
(XIII)

The sulfonation rate of the aromatic ion exchange resin is preferably from 5% by mol to 90% by mol, more preferably from 8% by mol to 80% by mol, and still more preferably from 10% by mol to 70% by mol.

In the disclosure, the sulfonation rate of the aromatic ion exchange resin refers to a ratio of a structural unit substituted with a sulfonic acid group to all structural units contained in the aromatic ion exchange resin.

Examples of the fluorine-based ion exchange resin include perfluorosulfonic acid electrolyte polymers such as Nafion (registered trademark), Aciplex (registered trademark), FLEMION (registered trademark), Aquivion, and GORE-SELECT.

The EW of the ion exchange resin is preferably 200 or more, more preferably 250 or more, still more preferably 300 or more, and particularly preferably 350 or more. The EW is preferably 2600 or less, more preferably 2300 or less, still more preferably 2000 or less, and particularly preferably 1700 or less. In a case in which the EW is 2600 or less, the ion conductivity of the composite membrane is further improved. In a case in which the EW is 200 or more, the dimensional stability of the composite membrane is further improved. The EW of the ion exchange resin is preferably from 200 to 2600.

The EW of the acid type ion exchange resin is measured by the following method.

An ion exchange resin in an amount of from approximately 0.02 g to 0.10 g is immersed in 50 mL of a 25°C saturated aqueous NaCl solution (0.26 g/mL), left to stand with stirring for 10 minutes, and then subjected to neutralization titration using reagent special grade phenolphthalein manufactured by FUJIFILM Wako Pure Chemical Corporation as an indicator and a reagent special grade 0.01 N aqueous sodium hydroxide solution manufactured by FUJIFILM Wako Pure Chemical Corporation. The Na-type ion exchange membrane obtained after neutralization was rinsed with pure water, and then vacuum-dried and weighed. The equivalent mass EW (g/eq) is determined from the following formula, where the equivalent of sodium hydroxide required for neutralization is designated as M (mmol) and the mass of the Na-type ion exchange membrane is designated as W (mg).

$$EW = (W/M) - 22$$

In an aspect, the proportion of the ion exchange resin in the composite membrane of the disclosure is preferably 70.0% by mass or more, more preferably 75.0% by mass or more, and still more preferably 80% by mass or more from the viewpoint of ion conductivity.

In an aspect, the proportion of the ion exchange resin in the composite membrane of the disclosure is preferably 98.0% by mass or less, more preferably 95.0% by mass or less, and still more preferably 93.0% by mass or less from the viewpoint of dimensional stability.

In an aspect, the proportion of the ion exchange resin in the composite membrane of the disclosure is preferably from 70.0% by mass to 98.0% by mass, more preferably from 75.0% by mass to 95.0% by mass, and still more preferably from 80.0% by mass to 93.0% by mass.

In another aspect, the proportion of the ion exchange resin in the composite membrane of the disclosure is preferably 50% by mass or more, more preferably 60% by mass or more, and still more preferably 70% by mass or more

from the viewpoint of ion conductivity.

In another aspect, the proportion of the ion exchange resin in the composite membrane of the disclosure is preferably 95% by mass or less, more preferably 94% by mass or less, and still more preferably 93% by mass or less from the viewpoint of dimensional stability.

In another aspect, the proportion of the ion exchange resin in the composite membrane of the disclosure is preferably from 50% by mass to 95% by mass, more preferably from 60% by mass to 94% by mass, and still more preferably from 70% by mass to 93% by mass.

In the case of producing a composite membrane using an ion exchange resin containing a fluorine atom in a molecular structure, hydrofluoric acid may be generated by decomposition of the ion exchange resin in a case in which the composite membrane operates as a solid polymer electrolyte membrane or the like. Therefore, the ion exchange resin is preferably an ion exchange resin containing no fluorine atom in a molecular structure or containing a fluorine atom content ratio of 50% by mass or less in a molecular structure.

In the composite membrane of the disclosure, another resin (hereinafter, also referred to as a non-ion exchange resin) having a low ion exchange capacity or exhibiting no ion exchange capacity may be used in combination with the ion exchange resin. In the disclosure, the non-ion exchange resin means that the EW is 10000 or more.

Specific examples of the non-ion exchange resin include resins including structural units represented by the above Formulas (I) to (XIII).

In a case in which the composite membrane of the disclosure uses an ion exchange resin and a non-ion exchange resin in combination, the content ratio between the ion exchange resin and the non-ion exchange resin is not particularly limited. For example, the content ratio between the ion exchange resin and the non-ion exchange resin may be adjusted such that the EW of the mixture of the ion exchange resin and the non-ion exchange resin becomes a desired value.

In the disclosure, the expression "using the ion exchange resin and the non-ion exchange resin in combination" means that the ion exchange resin and the non-ion exchange resin are in a state of being compatible with each other. The non-ion exchange resin does not contain polyolefin constituting the porous substrate.

The EW of the mixture of the ion exchange resin and the non-ion exchange resin is preferably 200 or more, more preferably 250 or more, still more preferably 300 or more, and particularly preferably 350 or more. The EW is preferably 2600 or less, more preferably 2300 or less, still more preferably 2000 or less, and particularly preferably 1700 or less. In a case in which the EW is 2600 or less, the ion conductivity of the composite membrane is further improved. In a case in which the EW is 200 or more, the dimensional stability of the composite membrane is further improved. The EW of the mixture of the ion exchange resin and the non-ion exchange resin is preferably from 200 to 2600.

In an aspect, the content ratio of the ion exchange resin in the mixture of the ion exchange resin and the non-ion exchange resin on a mass basis is preferably from 1% by mass to 95% by mass, more preferably from 5% by mass to 90% by mass, and still more preferably from 10% by mass to 80% by mass.

In an aspect, the sulfonation rate of the mixture of the ion exchange resin and the non-ion exchange resin is preferably from 5% by mol to 90% by mol, more preferably from 8% by mol to 80% by mol, and still more preferably from 10% by mol to 70% by mol.

In the disclosure, the sulfonation rate of the mixture of the ion exchange resin and the non-ion exchange resin in a case in which both the ion exchange resin and the non-ion exchange resin are aromatic refers to a ratio of a structural unit substituted with a sulfonic acid group to all structural units contained in the ion exchange resin and the non-ion exchange resin.

The sulfonation rate of the ion exchange resin (mixture of the ion exchange resin and the non-ion exchange resin in a case in which the ion exchange resin and the non-ion exchange resin are used in combination) in a case in which both the ion exchange resin and the non-ion exchange resin are aromatic refers to a value determined by a ratio between a unit structure having a sulfonic acid group and a unit structure having no sulfonic acid group measured by proton NMR measurement.

In a case in which the types and the molecular weights (for example, weight average molecular weights) of the structural units constituting the ion exchange resin and the non-ion exchange resin in the mixture, and the sulfonation rate of the ion exchange resin are known, the sulfonation rate determined by calculation on the basis of these values is taken as the sulfonation rate of the mixture.

In the ion exchange resin, the durability of the resin may decrease as the sulfonation rate increases. Therefore, in the case of using an ion exchange resin having a relatively low sulfonation rate, the ion exchange resin need not be used in combination with a non-ion exchange resin. In the case of using an ion exchange resin having a relatively low sulfonation rate and a non-ion exchange resin in combination, the content ratio of the ion exchange resin in the mixture of the ion exchange resin and the non-ion exchange resin on a mass basis may be relatively high.

On the other hand, in the case of using an ion exchange resin having a relatively high sulfonation rate, it is preferable to use the ion exchange resin and a non-ion exchange resin in combination.

For example, in the case of using, as the ion exchange resin, a sulfonated product of polyethersulfone having a sulfonation rate of from 1% by mol to 20% by mol (preferably from 3% by mol to 18% by mol, more preferably from 5% by

mol to 15% by mol), the sulfonated product of polyethersulfone may be used alone as the ion exchange resin.

On the other hand, in the case of using, as the ion exchange resin, a sulfonated product of polyethersulfone having a sulfonation rate of from more than 20% by mol to 60% by mol (preferably from 25% by mol to 50% by mol, more preferably from 30% by mol to 45% by mol), the sulfonated product of polyethersulfone as the ion exchange resin may be used in combination with the non-ion exchange resin from the viewpoint of the durability of the composite membrane. In this case, the content ratio of the ion exchange resin in the mixture of the ion exchange resin and the non-ion exchange resin on a mass basis is preferably from 10% by mass to 95% by mass, more preferably from 20% by mass to 90% by mass, and still more preferably from 25% by mass to 85% by mass.

The weight average molecular weight (Mw) of the ion exchange resin is preferably from 30000 to 1000000, more preferably from 35000 to 800000, and still more preferably from 40000 to 500000 from the viewpoint of the durability and mechanical properties of the composite membrane.

The weight average molecular weight of the non-ion exchange resin is preferably from 30000 to 1000000, more preferably from 50000 to 800000, and still more preferably from 80000 to 500000 from the viewpoint of the durability of the composite membrane.

The weight average molecular weight of the mixture of the ion exchange resin and the non-ion exchange resin is preferably from 50000 to 800000, more preferably from 80000 to 650000, and still more preferably from 100000 to 500000 from the viewpoint of the durability of the composite membrane.

In the disclosure, the weight average molecular weight of the resin refers to a value measured by gel permeation chromatography (GPC).

In the composite membrane of the disclosure, the content ratio of the silica material to the total of the silica material and the ion exchange resin (the total amount of the ion exchange resin and the non-ion exchange resin in the case of using the non-ion exchange resin in combination) is preferably 0.01% by mass or more, more preferably 0.1% by mass or more, still more preferably 0.5% by mass or more, and particularly preferably 0.7% by mass or more from the viewpoint of improving the film formability.

In the composite membrane of the disclosure, the content ratio of the silica material to the total of the silica material and the ion exchange resin is preferably 90% by mass or less, more preferably 80% by mass or less, still more preferably 60% by mass or less, and particularly preferably 50% by mass or less from the viewpoint of improving the film formability.

In the composite membrane of the disclosure, the content ratio of the silica material to the total of the silica material and the ion exchange resin is preferably from 0.01% by mass to 90% by mass, more preferably from 0.1% by mass to 80% by mass, still more preferably from 0.5% by mass to 60% by mass, and particularly preferably from 0.7% by mass to 50% by mass.

(Properties of Composite Membrane)

The Gurley value of the composite membrane is set to 1,000 sec/100 mL or more, and is preferably 2,000 sec/100 mL or more and more preferably 10,000 sec/100 mL or more from the viewpoint of gas barrier properties.

The Gurley value of the porous substrate is a value measured in accordance with JIS P8117:2009.

The average membrane thickness of the composite membrane is preferably 3 μm or more, more preferably 4 μm or more, still more preferably 5 μm or more, particularly preferably 10 μm or more, and especially particularly preferably 15 μm or more from the viewpoint of increasing the strength of the composite membrane.

The average membrane thickness of the composite membrane is preferably 400 μm or less, more preferably 350 μm or less, still more preferably 300 μm or less, particularly preferably 150 μm or less, and especially particularly preferably 100 μm or less from the viewpoint of maintaining proton conductivity.

The average membrane thickness of the composite membrane is preferably from 3 μm to 400 μm, more preferably from 4 μm to 350 μm, still more preferably from 5 μm to 300 μm, particularly preferably from 10 μm to 150 μm or less, and especially particularly preferably from 15 μm to 100 μm.

The average membrane thickness of the composite membrane is determined by measuring 20 points with a contact type membrane thickness meter and averaging the measured values.

A ratio (A/B) of an average membrane thickness A of the porous substrate to an average membrane thickness B of the composite membrane is preferably 0.10 or more, more preferably 0.12 or more, still more preferably 0.13 or more, and particularly preferably 0.14 or more from the viewpoint of dimensional stability.

The ratio (A/B) is preferably 1.0 or less, more preferably 0.80 or less, still more preferably 0.70 or less, and particularly preferably 0.60 or less from the viewpoint of proton conductivity.

The ratio (A/B) is preferably from 0.10 to 1.0, more preferably from 0.12 to 0.80, still more preferably from 0.13 to 0.70, and particularly preferably from 0.14 to 0.60.

The basis weight of the composite membrane is preferably 1 g/$m^2$ or more, more preferably 2 g/$m^2$ or more, still more preferably 5 g/$m^2$ or more, and particularly preferably 7 g/$m^2$ or more from the viewpoint of handleability.

The basis weight of the composite membrane is preferably 100 $g/m^2$ or less, more preferably 70 $g/m^2$ or less, still more preferably 50 $g/m^2$ or less, and particularly preferably 45 $g/m^2$ or less from the viewpoint of dimensional stability.
The basis weight of the composite membrane is preferably from 1 $g/m^2$ to 100 $g/m^2$, more preferably from 2 $g/m^2$ to 70 $g/m^2$, still more preferably from 5 $g/m^2$ to 50 $g/m^2$, and particularly preferably from 7 $g/m^2$ to 45 $g/m^2$. The basis weight of the composite membrane is determined by measuring the weight of a sample having a certain size and dividing the weight by the area.
A ratio (C/D) of a basis weight C of the porous substrate to a basis weight D of the composite membrane is preferably 0.03 or more, more preferably 0.04 or more, still more preferably 0.05 or more, and particularly preferably 0.055 or more from the viewpoint of dimensional stability.
The ratio (C/D) is preferably 0.5 or less, more preferably 0.4 or less, still more preferably 0.3 or less, and particularly preferably 0.2 or less from the viewpoint of proton conductivity.
The ratio (C/D) is preferably from 0.03 to 0.5, more preferably from 0.04 to 0.4, still more preferably from 0.05 to 0.3, and particularly preferably from 0.055 to 0.2.

(Structure of Composite Membrane)

The structure of the composite membrane of the disclosure is not particularly limited as long as it contains the porous substrate, the silica material, and the ion exchange resin described above. In order to ensure ion conductivity between one surface side and the other surface side in the composite membrane, it is preferable that the silica material and the ion exchange resin are filled into at least a part of pores of the porous substrate, and it is more preferable that the silica material and the ion exchange resin are filled into all pores of the porous substrate.
The composite membrane of the disclosure may have a structure including: the porous substrate; and an ion conductive layer provided on at least one surface side of the porous substrate and containing the silica material and the ion exchange resin.
Hereinafter, the structure of the composite membrane of the disclosure will be described with reference to the drawings. The following drawings are schematic cross-sectional views mainly for describing the laminating order of layers, and the structure of each layer is omitted or simplified. The sizes of members in each drawing are conceptual, and the relative relationship between the sizes of the members is not limited thereto. All members having substantially the same function as each other are marked with the same symbols throughout the drawings, and redundant description may be omitted.
Fig. 1 is a cross-sectional view of an embodiment of a composite membrane of the disclosure. A composite membrane 40 illustrated in Fig. 1 includes a porous substrate 20 and ion conductive layers 30 provided on both surface sides of the porous substrate 20. The silica material and the ion exchange resin are filled into at least a part of pores of the porous substrate 20. It is more preferable that the silica material and the ion exchange resin are filled into all pores of the porous substrate.
Fig. 2 is a cross-sectional view of another embodiment of the composite membrane of the disclosure. The composite membrane 40 illustrated in Fig. 2 includes the porous substrate 20 and an ion conductive layer 30 provided on one surface side of the porous substrate 20. The silica material and the ion exchange resin are filled into at least a part of pores of the porous substrate 20. It is more preferable that the silica material and the ion exchange resin are filled into all pores of the porous substrate.
Details of the porous substrate 20 and details of the silica material and the ion exchange resin constituting the ion conductive layer 30 are as described above.

(Method of Producing Composite Membrane)

The composite membrane of the disclosure may be produced by any method.
For example, the composite membrane of the disclosure may be produced by applying a liquid composition containing an ion exchange resin, a silica material, and a solvent to a porous substrate, or bringing a porous substrate into contact with a coating film formed of the liquid composition.
As the solvent contained in the liquid composition, a solvent capable of dissolving or dispersing the ion exchange resin can be used, and examples thereof include alcohols such as methanol, ethanol, n-propanol, isopropanol, and tert-butanol, diol solvents such as ethylene glycol, 1,2-propylene glycol, and 1,3-propylene glycol, aprotic solvents such as dimethyl sulfoxide, N,N-dimethylacetamide, N,N-dimethylformamide, and N-methyl-2-pyrrolidone, fluorine-containing alcohols, and fluorine-containing ethers.
Additives such as a dispersant such as a surfactant, a wetting agent, an antifoaming agent, and a pH adjusting agent may be added to the liquid composition if necessary.
The coating film formed of the liquid composition is obtained, for example, by applying the liquid composition onto a substrate.

Examples of the substrate include plastic films such as Teflon (registered trademark), polyester, polyimide, and polycarbonate, films made of metal such as aluminum, copper, iron, and stainless steel, and glass.

Examples of a method of applying the liquid composition include a doctor knife method, a bar coater method, a spin coater method, and a screen printing method as a batch method, and post-metering method and a pre-metering method as a continuous method. The post-metering method is a method in which an excessive coating liquid is applied, and then the coating liquid is removed to have a predetermined membrane thickness. The pre-metering method is a method of applying a coating liquid in an amount necessary to obtain a predetermined membrane thickness. Examples of the post-metering method include an air doctor coater method, a blade coater method, a rod coater method, a knife coater method, a squeeze coater method, an impregnation coater method, and a comma coater method, and examples of the pre-metering method include a die coater method, a reverse roll coater method, a transfer roll coater method, a gravure coater method, a kiss roll coater method, a cast coater method, a spray coater method, a curtain coater method, a calendar coater method, and an extrusion coater method.

In order to remove the solvent from the applied liquid composition, drying treatment may be performed. Drying is performed, for example, in a high-temperature environment. The drying temperature is preferably from 40°C to 100°C. The drying time is not particularly limited, and drying may be performed until the self-supporting property of the composite membrane is obtained.

The composite membrane of the disclosure may be produced, for example, as follows.

A liquid composition is applied onto a substrate such as glass to form a coating film, and then the porous substrate is layered on the coating film, left to stand for a while, and then dried to obtain a laminated body in which an ion conductive layer is provided on one surface of the porous substrate. Next, the liquid composition is applied onto the other surface of the porous substrate to form a coating film, and the coating film is left to stand for a while and then dried to obtain a laminated body in which ion conductive layers are provided on both surfaces of the porous substrate. Then, the laminated body is washed with purified water such as ion-exchanged water or distilled water, and dried to obtain a composite membrane.

The composite membrane of the disclosure may be produced, for example, as follows.

A liquid composition is applied onto a substrate such as glass to form a coating film, and then the porous substrate is layered on the coating film, left to stand for a while, and then dried to obtain a laminated body in which an ion conductive layer is provided on one surface of the porous substrate. Then, the laminated body is washed with purified water such as ion-exchanged water or distilled water, and dried to obtain a composite membrane.

Drying conditions, coating conditions, washing conditions, and the like are appropriately set in view of the shape, membrane thickness, and the like of the composite membrane.

<Membrane-Electrode Assembly>

A membrane-electrode assembly of the disclosure includes: the composite membrane of the disclosure; a cathode layered on one surface of the composite membrane; and an anode layered on another surface of the composite membrane. The membrane-electrode assembly of the disclosure may have other configurations other than the composite membrane, the anode, and the cathode. For example, a gas diffusion layer may be disposed on a surface of the cathode opposite to the composite membrane and on a surface of the anode opposite to the composite membrane.

The membrane-electrode assembly of the disclosure is suitably used for a solid polymer fuel cell or a solid polymer electrolyzer.

Examples of a method of producing a membrane-electrode assembly include (1) a method of preparing a coating liquid containing an ion exchange resin, a catalyst metal, and a solvent, directly applying the coating liquid onto a composite membrane, then drying and removing the solvent contained in the coating liquid to form a catalyst layer, and sandwiching the composite membrane between gas diffusion layers from both surfaces, (2) a method of applying the coating liquid onto a substrate serving as a gas diffusion layer, drying the coating liquid to form a catalyst layer, and then joining the gas diffusion layer to a composite membrane by a method such as hot pressing, and (3) a method of applying the coating liquid onto a film (substrate) exhibiting sufficient stability to the solvent contained in the coating liquid, drying the coating liquid to form a catalyst layer, hot-pressing the catalyst layer to the composite membrane, then peeling off the substrate film, and sandwiching the composite membrane between gas diffusion layers. As the ion exchange resin contained in the coating liquid, those similar to the ion exchange resin constituting the composite membrane may be used.

In the case of using the membrane-electrode assembly of the disclosure in a solid polymer fuel cell, the gas diffusion layer is responsible for supplying hydrogen or air as a fuel to an electrode, collecting electrons generated by a chemical reaction at the electrode, moisturizing a composite membrane, and the like. As the gas diffusion layer, a conventionally known material having excellent gas permeability, acid resistance, electrical conductivity, and mechanical strength, such as carbon paper and carbon cloth, can be used. It is also preferable to dispose a microporous layer on the surface of the gas diffusion layer on the electrode side in order to promote water discharge and moisture retention of the gas diffusion layer.

In the case of using the membrane-electrode assembly of the disclosure in a solid polymer electrolyzer, a

conventionally known material made of a carbon material such as carbon paper or carbon cloth, or a metal material such as stainless steel (Fe-Cr-based alloy, Fe-Ni-Cr-based alloy, and the like), aluminum, zinc, nickel, or titanium can be used as the gas diffusion layer.

In the case of using the membrane-electrode assembly of the disclosure in a solid polymer fuel cell, the catalyst contained in the catalyst layer may be the same or different between the anode side (hydrogen electrode) and the cathode side (air electrode), but a catalyst in which a metal catalyst composed of platinum or a platinum alloy is supported on carbon is preferable. Carbon as a carrier preferably has a specific surface area of from 50 $m^2/g$ to 2000 $m^2/g$ because a metal catalyst is supported on the carbon carrier with favorable dispersibility and the carbon carrier is excellent in activity of a stable electrode reaction over a long period of time.

The metal catalyst is preferably a metal catalyst composed of platinum because it is highly active against hydrogen oxidation reaction at an anode and oxygen reduction reaction at a cathode in a solid polymer fuel cell. Since stability and activity as an electrode catalyst can be further imparted in some cases, a metal catalyst composed of a platinum alloy is also preferable. The platinum alloy is preferably an alloy of platinum and one or more metals selected from the group consisting of platinum group metals (ruthenium, rhodium, palladium, osmium, iridium) other than platinum, gold, silver, chromium, iron, titanium, manganese, cobalt, nickel, molybdenum, tungsten, aluminum, silicon, zinc, and tin, and the platinum alloy may contain an intermetallic compound of platinum and a metal alloyed with platinum. In a case in which a gas containing carbon monoxide is supplied at the anode, it is preferable to use an alloy containing platinum and ruthenium since the activity of the catalyst is stabilized.

In the case of using the membrane-electrode assembly of the disclosure in a solid polymer electrolyzer, a metal catalyst composed of platinum or a platinum alloy is preferably supported on carbon on the cathode side (hydrogen electrode). On the other hand, iridium, platinum, or the like can be used as a catalyst on the anode side (air electrode side).

<Solid Polymer Fuel Cell, Solid Polymer Electrolyzer, and Electrochemical Hydrogen Compressor>

The composite membrane of the disclosure can be used in a solid polymer fuel cell, a solid polymer electrolyzer, an electrochemical hydrogen compressor, and the like.

In the solid polymer electrolyzer, water or an organic solvent can be electrolyzed to produce hydrogen or the like.

The solid polymer fuel cell and the solid polymer electrolyzer of the disclosure include the membrane-electrode assembly of the disclosure and separators disposed on both surfaces of the membrane-electrode assembly.

A cell in which separators are disposed at outer sides of the membrane-electrode assembly of the disclosure may be used as a single cell, and such a single cell may be used alone, or a plurality of single cells may be layered with a cooling plate or the like interposed therebetween and used to configure a solid polymer fuel cell or a solid polymer electrolyzer.

As the separator, a conventionally known carbon material, or a conventionally known metal material such as stainless steel, which blocks fuel and air between the solid polymer fuel cell laminated bodies or between solid polymer electrolyzer laminated bodies and provides a fuel flow path, can be used.

The electrochemical hydrogen compressor of the disclosure includes the composite membrane of the disclosure.

The electrochemical hydrogen compressor of the disclosure may include, for example, the composite membrane of the disclosure, a cathode provided on one surface of the composite membrane, and anode provided on another surface of the composite membrane, an anode supply path for supplying a hydrogen-containing gas to the anode, a cathode discharge path for extracting purified hydrogen gas generated from the cathode, and a power source for applying a voltage to the anode and the cathode.

## EXAMPLES

Hereinafter, the composite membrane of the disclosure will be described more specifically with reference to Examples. Materials, amounts used, proportions, treatment procedures, and the like shown in the following Examples can be appropriately changed without departing from the gist of the disclosure. Therefore, the scope of the composite membrane of the disclosure should not be construed as being limited by the following specific examples.

(Production of Porous Substrate A)

A polyethylene composition obtained by mixing 60 parts by mass of ultra-high-molecular-weight polyethylene having a weight average molecular weight (Mw) of 4600000 and 40 parts by mass of high-density polyethylene having a weight average molecular weight (Mw) of 560000 and a density of 950 $kg/m^3$ was prepared. Then, the polyethylene composition and decalin as a solvent were mixed so that the concentration of the polyethylene composition was 25% by mass, thereby preparing a polyethylene solution.

The polyethylene solution was extruded from a die into a sheet shape at a temperature of 166°C to obtain an

extruded product, and then the extruded product was cooled in a water bath at a water temperature of 20°C, thereby obtaining a first gel sheet.

The first gel sheet was pre-dried under the condition of 30°C for 7 minutes, then subjected to primary stretching to 1.2 times in the longitudinal direction, and then subjected to main drying under the condition of 60°C for 5 minutes, thereby obtaining a second gel sheet. The residual amount of the solvent in the second gel sheet was set to less than 1% by mass.

Next, as secondary stretching, the second gel sheet was stretched in the longitudinal direction at a magnification of 3.5 times at a temperature of 90°C, and successively stretched in the width direction at a magnification of 9.0 times at a temperature of 125°C. After the secondary stretching, heat treatment (heat fixation) at 128°C was immediately performed.

The solvent in the sheet was extracted while the sheet after heat fixation was immersed in a three-tank methylene chloride bath successively for 2.5 minutes in total. In a case in which the tank where immersion is started is defined as a first tank, and the tank where immersion is finished is defined as a third tank, the purity of the washing solvent is (low) first tank < second tank < third tank (high). After the sheet was carried out from the methylene chloride bath, the sheet was dried on a heating roll at 40°C to remove methylene chloride. Thereafter, the sheet was annealed in a heated atmosphere at 110°C.

A porous substrate A including a polyolefin porous membrane was obtained through the above steps. Physical properties of the obtained porous substrate A are shown in Table 1. A method of measuring each physical property will be described later.

(Production of Porous Substrate B)

A polyethylene composition obtained by mixing 12 parts by mass of ultra-high-molecular-weight polyethylene having a weight average molecular weight of 4600000 and 3 parts by mass of high-density polyethylene having a weight average molecular weight of 560000 and a density of 950 kg/m$^3$ was used. A pre-prepared mixed solvent of 72 parts by mass of liquid paraffin and 13 parts by mass of decalin was mixed such that the concentration of the polyethylene composition was 15% by mass, thereby preparing a polyethylene solution.

The polyethylene solution was extruded from a die into a sheet shape at a temperature of 160°C to obtain an extruded product, the extruded product was cooled in a water bath at 25°C, a water flow was provided on the surface layer of the water bath, and a gel sheet was obtained while preventing the mixed solvent released from a gelled sheet in the water bath and floating on the water surface from re-adhering to the sheet.

The gel sheet was dried at 55°C for 10 minutes and further dried at 95°C for 10 minutes to remove decalin from the inside of the gel sheet. Thereafter, the gel sheet was stretched in the longitudinal direction at a magnification of 5.5 times at a temperature of 100°C and successively stretched in the width direction at a magnification of 13 times at a temperature of 110°C, and then heat treatment (heat fixation) was immediately performed at a temperature of 135°C.

Next, the liquid paraffin in the sheet was extracted while the gel sheet was immersed in a two-tank methylene chloride bath successively for 30 seconds per tank. In a case in which the tank where immersion is started is defined as a first tank, and the tank where immersion is finished is defined as a second tank, the purity of the washing solvent is (low) first tank < second tank (high). Thereafter, methylene chloride was removed by drying at 45°C, the sheet was annealed while being conveyed on a roller heated to 120°C, thereby obtaining a porous substrate B including a polyolefin porous membrane.

Physical properties of the obtained porous substrate B are shown in Table 1.

(Production of Porous Substrate C)

A polyethylene composition obtained by mixing 15 parts by mass of ultra-high-molecular-weight polyethylene having a weight average molecular weight (Mw) of 4600000 and 85 parts by mass of high-density polyethylene having a weight average molecular weight (Mw) of 560000 and a density of 950 kg/m$^3$ was prepared. Then, the polyethylene composition and decalin as a solvent were mixed so that the concentration of the polyethylene composition was 30% by mass, thereby preparing a polyethylene solution.

The polyethylene solution was extruded from a die into a sheet shape at a temperature of 158°C to obtain an extruded product, and then the extruded product was cooled in a water bath at a water temperature of 20°C, thereby obtaining a first gel sheet.

The first gel sheet was pre-dried under the condition of 60°C for 10 minutes, then subjected to primary stretching at 1.2 times in the longitudinal direction, and then subjected to main drying under the condition of 60°C for 5 minutes, thereby obtaining a second gel sheet. The residual amount of the solvent in the second gel sheet was set to less than 1% by mass.

Next, as secondary stretching, the second gel sheet was stretched in the longitudinal direction at a magnification of 4.5 times at a temperature of 90°C, and successively stretched in the width direction at a magnification of 10.0 times at a temperature of 125°C. After the secondary stretching, heat treatment (heat fixation) at 134°C was immediately performed.

The solvent in the sheet was extracted while the sheet after heat fixation was immersed in a three-tank methylene

chloride bath successively for 2.5 minutes in total. In a case in which the tank where immersion is started is defined as a first tank, and the tank where immersion is finished is defined as a third tank, the purity of the washing solvent is (low) first tank < second tank < third tank (high). After the sheet was carried out from the methylene chloride bath, the sheet was dried on a heating roll at 40°C to remove methylene chloride. Thereafter, the sheet was annealed in a heated atmosphere at 80°C.

A porous substrate C including a polyolefin porous membrane was obtained through the above steps. Physical properties of the obtained porous substrate C are shown in Table 1.

-Weight Average Molecular Weight of Polyethylene-

The weight average molecular weight of polyethylene was measured by gel permeation chromatography.

Specifically, the weight average molecular weight of polyethylene was measured by heating and dissolving the polyethylene to be measured in o-dichlorobenzene, and performing measurement by gel permeation chromatography (system: Alliance GPC 2000 Type manufactured by Waters Corporation, column: GMH6-HT and GMH6-HTL) under the conditions of a column temperature of 135°C and a flow rate of 1.0 mL/min. Molecular weight monodisperse polystyrene (manufactured by Tosoh Corporation) was used for calibrating the molecular weight.

(Properties of Porous Substrate)

The properties of the porous substrate were measured by the following methods.

-Average Membrane thickness A of Porous Substrate-

The average membrane thickness A of the porous substrate was measured using a contact type membrane thickness meter (ABS Digimatic Indicator, model number Model ID: ID-S112X, manufactured by Mitutoyo Corporation). Specifically, the membrane thickness of the porous substrate was measured at 20 points, and the arithmetic average value thereof was taken as the average membrane thickness A of the porous substrate. As a contact terminal, a cylindrical terminal having a bottom surface with a diameter of 6.5 mm was used.

-Basis Weight C of Porous Substrate-

The porous substrate was cut to prepare a sample of 10 cm × 10 cm. The basis weight C of the porous substrate was a value obtained by multiplying the measured value of the mass of the sample by 100.

-Porosity of Porous Substrate-

The porosity (ε) of the porous substrate was calculated by the following formula.

$$\varepsilon\ (\%) = \{1 - Ws/(ds \cdot t)\} \times 100$$

Ws: Basis weight ($g/m^2$) of porous substrate
ds: True density of polyolefin ($g/cm^3$)
t: Membrane thickness (μm) of porous substrate

The basis weight of the porous substrate was determined by the above-described method.

-Air Permeability (Gurley Value) of Porous Substrate-

The Gurley value of the porous substrate was measured in accordance with JIS P8117:2009 using a Gurley densometer manufactured by Toyo Seiki Seisaku-sho, Ltd. For the measurement, the time during which 200 ml of air passes through a 28.6 mmφ sample was measured, and the time was halved and converted to a value per 100 ml.

-Average Pore Size of Porous Substrate-

The average pore size of the porous substrate was determined by a half dry method specified in ASTM E1294-89 using a perm porometer (model: CFP-1200-AEXL) of Porous Materials INC. and using Galwick (surface tension: 15.9 dyn/cm) manufactured by Porous Materials INC. as an immersion liquid. The measurement temperature was set to 25°C, and the measurement pressure was changed in a range of from 0 kPa to 600 kPa.

[Table 1]

| Porous substrate | Average membrane thickness A (μm) | Gurley value (sec/100 mL) | Porosity (%) | Basis weight C (g/m²) | Average pore size (nm) |
|---|---|---|---|---|---|
| A | 13 | 9 | 80 | 2.6 | 180 |
| B | 4 | 28 | 53 | 1.7 | 30 |
| C | 27 | 6 | 82 | 4.8 | 290 |

(Production of Silica Material)

To 400 parts by mass of concentrated sulfuric acid (concentration: 99.9%) at 25°C, 10 parts by mass of silicon dioxide (manufactured by Sigma-Aldrich Co. LLC., number average particle size of primary particles: from 10 nm to 20 nm, silica particles) was added little by little, and the mixture was treated using SpeedMixer DAC400 manufactured by Hauschild at 1500 rpm for 15 minutes to obtain a dispersion in which silica particles were dispersed in concentrated sulfuric acid. The obtained dispersion was added to 4000 parts by mass of deionized water little by little, washed, and then filtered to recover silica particles obtained as a filtered product. The recovered silica particles were further washed with 4000 parts by mass of deionized water and filtered, and a filtered product was recovered. The obtained filtered product was washed with 200 parts by mass of acetone and filtered again. The filtered product was dried in a hot air dryer at 80°C to obtain 14.5 parts by mass of a particulate silica material. The degree of sulfonation of the silica material based on XRF was 0.3% as measured by the method described later. The pH of the dispersion of the silica material was measured by the method described later and found to be 1.2.

-pH Measurement-

0.1 g of silica material was dispersed in 1.9 g of deionized water to prepare a dispersion (5% by mass dispersion). The pH of the dispersion was measured at 25°C using a pH measuring instrument (PCE-PH18).

-Measurement of Degree of Sulfonation-

The silica material was weighed in a measurement container under a helium atmosphere, and measured using an XRF measurement apparatus (PANalytical AxiosMAX). The concentration of sulfur atoms and the concentration of silicon atoms were determined from the obtained spectrum, and the ratio of the concentration of sulfur atoms to the total of the concentration of silicon atoms and the concentration of sulfur atoms was defined as the degree of sulfonation. It was confirmed by SEM-EDX measurement that a sulfonic acid group was present on the surface of the silica material.

-Measurement of Number Average Particle Size of Primary Particles-

The number average particle size of the primary particles of the silica particles was calculated as an arithmetic average value obtained by determining the equivalent circle diameters of 50 silica particles by scanning electron microscope observation.

(Preparation of Liquid Composition 1)

The silica material described above was added to N,N-dimethylacetamide (DMAc) and dispersed with an ultrasonic bath until the resulting mixture became uniform, thereby obtaining a silica material dispersion. Subsequently, sulfonated polyethersulfone (s-PES, EW: 500 g/eq, weight average molecular weight: 140000, acting as an ion exchange resin) having a sulfonation rate of 34.1% by mol was added while stirring the silica material dispersion to obtain a liquid composition 1 having a solid content concentration of 10% by mass and a content ratio of the silica material in the solid content of 1% by mass.

The weight average molecular weight of s-PES was determined according to the following method.

Device name: high performance liquid chromatograph LC-20A series (manufactured by Shimadzu Corporation)
Column oven: CTO-20A
Mobile phase: N-methyl-2-pyrrolidone
Autosampler: SIL-20AHT
LC workstation: LC solution
Flow rate: 0.3 ml/min

Differential refractometer detector: RID-10A
Oven temperature: 60°C
Molecular weight standard sample: polystyrene

(Preparation of Liquid Composition 2)

A liquid composition 2 was obtained in the same manner as in the preparation of the liquid composition 1 except that the solid content concentration was 10% by mass and the content ratio of the silica material in the solid content was 2% by mass.

(Preparation of Liquid Composition 3)

A liquid composition 3 was obtained in the same manner as in the preparation of the liquid composition 1 except that the solid content concentration was 10% by mass and the content ratio of the silica material in the solid content was 5% by mass.

(Preparation of Liquid Composition 4)

A liquid composition 4 was obtained in the same manner as in the preparation of the liquid composition 1 except that the solid content concentration was 10% by mass and the content ratio of the silica material in the solid content was 10% by mass.

(Preparation of Liquid Composition 5)

Sulfonated polyethersulfone (s-PES, EW: 500 g/eq, weight average molecular weight: 140000) having a sulfonation rate of 34.1% by mol was added while stirring N,N-dimethylacetamide (DMAc) to obtain a liquid composition 5 having a solid content concentration of 10% by mass and a content ratio of the silica material in the solid content of 0% by mass.

[Example 1]

The liquid composition 1 was cast with a doctor knife (200 μm) on a glass plate, and the porous substrate A was layered on the cast liquid composition 1 so as not to wrinkle. The resulting product was left to stand still for 10 minutes, and then dried in a hot air dryer at 60°C for 30 minutes. The liquid composition 1 was cast with a doctor knife (200 μm) on top of the laminated body obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a composite membrane 1.

[Example 2]

A composite membrane 2 was obtained in the same manner as in Example 1 except that the liquid composition 2 was used instead of the liquid composition 1.

[Example 3]

A composite membrane 3 was obtained in the same manner as in Example 1 except that the liquid composition 3 was used instead of the liquid composition 1.

[Example 4]

A composite membrane 4 was obtained in the same manner as in Example 1 except that the liquid composition 4 was used instead of the liquid composition 1.

[Example 5]

The liquid composition 3 was cast with a doctor knife (100 μm) on a glass plate, and the porous substrate B was layered on the cast liquid composition 3 so as not to wrinkle. The resulting product was left to stand still for 10 minutes, and then dried in a hot air dryer at 60°C for 30 minutes. The liquid composition 3 was cast with a doctor knife (100 μm) on top of

the laminated body obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a composite membrane 5.

[Example 6]

A composite membrane 6 was obtained in the same manner as in Example 5 except that the liquid composition 4 was used instead of the liquid composition 3.

[Example 7]

A composite membrane 7 was obtained in the same manner as in Example 3 except that the porous substrate C was used instead of the porous substrate A.

[Reference Example 1]

The liquid composition 1 was cast with a doctor knife (200 μm) on a glass plate, and the cast liquid composition 1 was left to stand still for 10 minutes, and then dried in a hot air dryer at 60°C for 30 minutes. The liquid composition 1 was re-cast with a doctor knife (200 μm) on top of the resin membrane obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a reference resin membrane 1.

[Reference Example 2]

A reference resin membrane 2 was obtained in the same manner as in Reference Example 1 except that the liquid composition 3 was used instead of the liquid composition 1.

[Reference Example 3]

The liquid composition 3 was cast with a doctor knife (200 μm) on a glass plate and dried in a hot air dryer at 60°C for 30 minutes. The resulting product was washed with ion-exchanged water for 10 minutes. The resulting product was further fixed to a metal frame and dried at 60°C for 10 minutes to obtain a reference resin membrane 3.

[Reference Example 4]

A reference resin membrane 4 was obtained in the same manner as in Reference Example 1 except that the liquid composition 4 was used instead of the liquid composition 1.

[Comparative Example 1]

The liquid composition 5 was cast with a doctor knife (200 μm) on a glass plate, and the porous substrate A was layered on the cast liquid composition 5 so as not to wrinkle. The resulting product was left to stand still for 10 minutes, and then dried in a hot air dryer at 60°C for 30 minutes. The liquid composition 5 was cast with a doctor knife (200 μm) on top of the laminated body obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a comparative composite membrane 1.

[Comparative Example 2]

The liquid composition 5 was cast with a doctor knife (100 μm) on a glass plate, and the porous substrate B was layered on the cast liquid composition 5 so as not to wrinkle. The resulting product was left to stand still for 10 minutes, and then dried in a hot air dryer at 60°C for 10 minutes. The liquid composition 5 was cast with a doctor knife (100 μm) on top of the laminated body obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a comparative composite membrane 2.

[Comparative Example 3]

The liquid composition 5 was cast with a doctor knife (200 μm) on a glass plate, and the cast liquid composition 5 was left to stand still for 10 minutes, and then dried in a hot air dryer at 60°C for 30 minutes. The liquid composition 5 was re-cast with a doctor knife (200 μm) on top of the resin membrane obtained by drying, and then left to stand still for 10 minutes. The resulting product was dried in a hot air dryer at 60°C for 30 minutes, and then washed with ion-exchanged water for 10 minutes. The resulting product was further fixed to a metal frame and dried at 60°C for 10 minutes to obtain a comparative resin membrane 3.

(Evaluation)

The composite membranes and the resin membranes of Examples, Reference Examples, and Comparative Examples obtained as described above were evaluated by the following methods. The obtained results are shown in Table 2.

-Basis Weight D of Composite Membrane and Basis Weight of Resin Membrane-

The basis weight D of the composite membrane and the basis weight of the resin membrane were determined by the same method as in "Basis Weight C of Porous Substrate" described above.

-Average Membrane thickness B of Composite Membrane and Average Membrane thickness of Resin Membrane-

The average membrane thickness B of the composite membrane and the average membrane thickness of the resin membrane were determined by the same method as in "Average Membrane thickness A of Porous Substrate" described above.

-Adhesion Amount-

From the basis weight C of the porous substrate and the basis weight D of the composite membrane determined as described above, the adhesion amounts of the silica material and the ion exchange resin to the porous substrate were calculated.

Adhesion amount ($g/m^2$) = Basis weight D ($g/m^2$) of composite membrane - Basis weight C ($g/m^2$) of porous substrate

-Air Permeability (Gurley Value) of Composite Membrane and Resin Membrane-

The Gurley value of each of the composite membrane and the resin membrane was determined by the same method as in "Air Permeability (Gurley Value) of Porous Substrate" described above. In Table 2, "∞" means that the Gurley value is 10,000 sec/100 mL or more.

-Content Ratio (% by mass) of Each Component-

The content ratios (% by mass) of s-PES, the porous substrate, and the silica material ($sSiO_2$) in the entire composite membrane were determined on the basis of the adhesion amounts of the silica material and the ion exchange resin to the porous substrate, the proportions of s-PES and the silica material in the solid content contained in the liquid composition, and the basis weights of the composite membrane and the porous substrate.

-Proton Conductivity-

The proton conductivity of each of the composite membrane and the resin membrane was measured by the following method.

The impedance in the thickness direction of the composite membrane or the resin membrane was measured in a frequency range of 50 Hz to 107 Hz using an electrochemical impedance measuring device (TSC Battery manufactured by rhd instruments GmbH & Co. KG), and the proton conductivity was measured and used as an index of the proton conductivity. Each of the composite membranes and the resin membranes used in the above measurement was stored in deionized water, and subjected to measurement of proton conductivity in a measurement cell in a state where the temperature was raised to 80°C.

-Area Change Rate-

The composite membrane and the resin membrane were dried in a dryer at 50°C until there was no weight change. Thereafter, the lengths of the composite membrane and the resin membrane in the longitudinal direction and the width direction were measured (condition 1). The straight line distance connecting the center portions of the sides facing each other is defined as the length in the longitudinal direction and the length in the width direction.

The composite membrane and the resin membrane were held in pure water for 64 hours, then treated with hot water at 80°C for 2 hours, and the lengths in the longitudinal direction and the width direction were quickly measured (condition 2).

The dimensional change rate was determined using the above measurement results, the area was determined by the length in the longitudinal direction × the length in the width direction, and the area change rate was calculated as follows.

Area change rate A = [Area (condition 2) - Area (condition 1)] × 100/Area (condition 2)

-Ratio (A/B) of Average Membrane thickness A of Porous Substrate to Average Membrane thickness B of Composite Membrane-

From the average membrane thickness A of the porous substrate and the average membrane thickness B of the composite membrane determined as described above, the ratio (A/B) of the average membrane thickness A of the porous substrate to the average membrane thickness B of the composite membrane was calculated.

-Ratio (C/D) of Basis Weight C of Porous Substrate to Basis Weight D of Composite Membrane-

From the basis weight C of the porous substrate and the basis weight D of the composite membrane determined as described above, the ratio (C/D) of the basis weight C of the porous substrate to the basis weight D of the composite membrane was calculated.

[Table 2]

| Composite membrane | Porous substrate | Basis weight D ($g/m^2$) | Average membrane thickness B ($\mu m$) | Adhesion amount ($g/m^2$) | Gurley value (sec/100 mL) | S-PES (% by mass) | Porous substrate (% by mass) | $sSiO_2$ (% by mass) | Proton conductivity $\times 10^{-6}$ (S/cm) | Area change rate 80°C (%) | Ratio (A/B) | Ratio (C/D) |
|---|---|---|---|---|---|---|---|---|---|---|---|---|
| Example 1 | A | 42.5 | 50 | 39.8 | ∞ | 92.8 | 6.2 | 0.9 | 230 | 3.3 | 0.26 | 0.06 |
| Example 2 | A | 36.9 | 46 | 34.3 | ∞ | 91.1 | 7.1 | 1.9 | 270 | 6.5 | 0.28 | 0.07 |
| Example 3 | A | 33.8 | 45 | 31.3 | ∞ | 87.8 | 7.6 | 4.6 | 410 | 3.3 | 0.29 | 0.08 |
| Example 4 | A | 41.5 | 53 | 38.9 | ∞ | 84.4 | 6.2 | 9.4 | 660 | 9.6 | 0.24 | 0.06 |
| Example 5 | B | 10.9 | 26 | 9.1 | ∞ | 79.9 | 15.9 | 4.2 | 410 | 0.0 | 0.15 | 0.16 |
| Example 6 | B | 17.6 | 26 | 15.9 | ∞ | 81.1 | 9.8 | 9.0 | 620 | 1.7 | 0.15 | 0.10 |
| Example 7 | C | 37.9 | 48 | 33.1 | ∞ | 83.1 | 12.5 | 4.4 | 410 | 3.3 | 0.56 | 0.13 |
| Reference Example 1 | None | 33.7 | 38 | - | - | 99.0 | 0.0 | 1.0 | 1140 | 15.0 | - | - |
| Reference Example 2 | None | 27.9 | 38 | - | - | 95.0 | 0.0 | 5.0 | 2100 | 16.2 | - | - |
| Reference Example 3 | None | 16.7 | 27 | - | - | 95.0 | 0.0 | 5.0 | 2100 | 12.3 | - | - |
| Reference Example 4 | None | 39.6 | 49 | - | - | 90.0 | 0.0 | 10.0 | 3300 | 17.9 | - | - |
| Comparative Example 1 | A | 35.0 | 28 | 32.3 | ∞ | 92.3 | 7.7 | 0.0 | 180 | 4.9 | 0.46 | 0.08 |
| Comparative Example 2 | B | 11.2 | 10 | 9.5 | ∞ | 84.3 | 15.7 | 0.0 | 160 | 0.0 | 0.40 | 0.16 |
| Comparative Example 3 | None | 37.0 | 25 | 37.0 | - | 100.0 | 0.0 | 0.0 | 900 | 16.5 | - | - |

As is apparent from the evaluation results in Table 2, it is found that the composite membranes of Examples are superior in proton conductivity and dimensional stability to the composite membranes or resin membranes of Comparative Examples.

As shown in Table 2, proton conductivity was measured for the composite membranes of Examples 1 to 7 and Comparative Examples 1 and 2, indicating that a proton conduction path was constructed between one surface and the other surface of these composite membranes. This suggests that the silica material and the ion exchange resin are filled into at least a part of pores of the porous substrate, and the composite membrane of the present invention is provided with an ion conductive layer.

The entire contents of the disclosures by Japanese Patent Application No. 2023-158829 filed on September 22, 2023 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

**1.** A composite membrane comprising:

a porous substrate including a polyolefin microporous membrane;
a silica material having a substrate containing silicon dioxide and having a sulfonic acid group on at least a surface of the substrate; and
an ion exchange resin,
wherein a Gurley value is 1,000 sec/100 mL or more.

**2.** The composite membrane according to claim 1, wherein a porosity of the porous substrate is from 50% to 90%.

**3.** The composite membrane according to claim 1, wherein the silica material and the ion exchange resin are filled into at least a part of pores of the porous substrate.

**4.** The composite membrane according to claim 1, comprising:

the porous substrate; and
an ion conductive layer provided on at least one surface side of the porous substrate and containing the silica material and the ion exchange resin.

**5.** The composite membrane according to claim 1, wherein a ratio (A/B) of an average membrane thickness A of the porous substrate to an average membrane thickness B of the composite membrane is from 0.10 to 1.0.

**6.** The composite membrane according to claim 1, wherein a ratio (C/D) of a basis weight C of the porous substrate to a basis weight D of the composite membrane is from 0.03 to 0.5.

**7.** The composite membrane according to claim 1, wherein a ratio of a concentration of sulfur atoms to a total of a concentration of silicon atoms and the concentration of sulfur atoms in the silica material, determined by X-ray fluorescence analysis (XRF) measurement is from 0.01% to 90%.

**8.** The composite membrane according to claim 1, wherein the substrate is in a particulate form.

**9.** The composite membrane according to claim 1, wherein the substrate is silica particles, and a number average particle size of primary particles of the silica particles is from 1 nm to 500 nm.

**10.** A membrane-electrode assembly comprising:

the composite membrane according to any one of claims 1 to 9;
a cathode layered on one surface of the composite membrane; and
an anode layered on another surface of the composite membrane.

**11.** A solid polymer fuel cell comprising:

the membrane-electrode assembly according to claim 10; and
separators disposed on both surfaces of the membrane-electrode assembly.

**12.** A solid polymer electrolyzer comprising:

the membrane-electrode assembly according to claim 10; and
separators disposed on both surfaces of the membrane-electrode assembly.

**13.** An electrochemical hydrogen compressor comprising the composite membrane according to any one of claims 1 to 9.

FIG.1

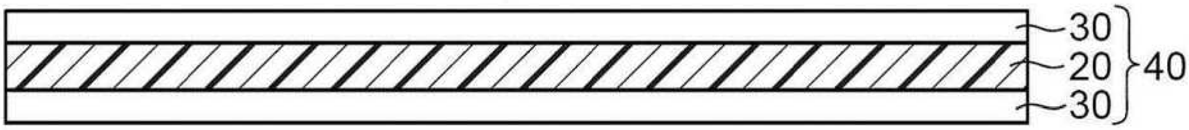


FIG.2

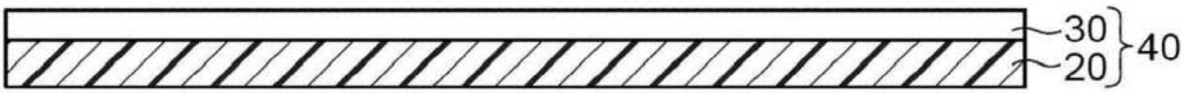

## INTERNATIONAL SEARCH REPORT

International application No.
**PCT/JP2024/033340**

**A. CLASSIFICATION OF SUBJECT MATTER**

***H01M 8/1058***(2016.01)i; ***B32B 27/20***(2006.01)i; ***B32B 27/32***(2006.01)i; ***C25B 13/08***(2006.01)i; ***H01M 8/10***(2016.01)i; ***H01M 8/106***(2016.01)i; ***H01M 8/1048***(2016.01)i; ***H01M 8/1053***(2016.01)i
FI: H01M8/1058; B32B27/20 Z; B32B27/32 Z; C25B13/08 303; C25B13/08 304; H01M8/10 101; H01M8/1048; H01M8/1053; H01M8/106

According to International Patent Classification (IPC) or to both national classification and IPC

**B. FIELDS SEARCHED**

Minimum documentation searched (classification system followed by classification symbols)

H01M8/1058; B32B27/20; B32B27/32; C25B13/08; H01M8/10; H01M8/106; H01M8/1048; H01M8/1053

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2014/0134506 A1 (KUB, Francis John) 15 May 2014 (2014-05-15)<br>fig. 3-5, the explanation | 1-13 |
| A | JP 2012-530181 A (ARKEMA INC.) 29 November 2012 (2012-11-29)<br>claims | 1-13 |
| A | JP 2006-331848 A (KONICA MINOLTA HOLDINGS, INC.) 07 December 2006 (2006-12-07)<br>claims | 1-13 |
| A | CN 102479959 A (DALIAN INSTITUTE OF CHEMICAL PHYSICS, CHINESE ACADEMY OF SCIENCES) 30 May 2012 (2012-05-30)<br>claims | 1-13 |
| A | WO 2009/066952 A1 (DONGJIN SEMICHEM CO., LTD.) 28 May 2009 (2009-05-28)<br>claims | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/033340**

**C. DOCUMENTS CONSIDERED TO BE RELEVANT**

| Category* | Citation of document, with indication, where appropriate, of the relevant passages | Relevant to claim No. |
|---|---|---|
| A | JP 2004-241391 A (SAMSUNG SDI CO., LTD.) 26 August 2004 (2004-08-26) claims | 1-13 |
| A | US 2001/0024755 A1 (BAHAR, Bamdad) 27 September 2001 (2001-09-27) claims | 1-13 |

Form PCT/ISA/210 (second sheet) (July 2022)

**INTERNATIONAL SEARCH REPORT**
**Information on patent family members**

International application No.
**PCT/JP2024/033340**

| Patent document cited in search report | Publication date (day/month/year) | Patent family member(s) | Publication date (day/month/year) |
|---|---|---|---|
| US 2014/0134506 A1 | 15 May 2014 | (Family: none) | |
| JP 2012-530181 A | 29 November 2012 | US 2012/0135333 A1<br>claims<br>WO 2010/147867 A1<br>EP 2671918 A1<br>CN 102459455 A<br>KR 10-2012-0030136 A | |
| JP 2006-331848 A | 07 December 2006 | (Family: none) | |
| CN 102479959 A | 30 May 2012 | (Family: none) | |
| WO 2009/066952 A1 | 28 May 2009 | KR 10-2009-0053499 A | |
| JP 2004-241391 A | 26 August 2004 | US 2005/0175880 A1<br>claims<br>KR 10-0493171 B1<br>CN 1519970 A | |
| US 2001/0024755 A1 | 27 September 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005166557 A
- JP 2011241361 A
- JP S6422932 A
- JP H1158051 A
- JP 2023158829 A